# EUROPEAN PATENT APPLICATION

(11) **EP 4 818 250 A1**
(43) Date of publication of application: **07.10.2026**
(21) Application number: 25167427.1
(22) Date of filing: 31.03.2025
(51) Int. Cl.: C08L 23/10, C08F 210/06

(54) **RECYCLED POLYOLEFINS COMPOSITION**

(71) Applicant: Basell Poliolefine Italia S.r.l., 20121 Milano (IT)
(72) Inventor: CAVALIERI, Claudio, 44122 Ferrara (IT)
(74) Representative: LyondellBasell

(57) **Abstract**

A recycled polyolefin composition comprising 15 wt% to 60 wt% of recycled polypropylene (T1) and 40 wt% to 85 wt% of a polypropylene composition (T2). T2 consists of 5 wt% to 35 wt% of a first propylene homopolymer and 65 wt% to 95 wt% of a polypropylene-ethylene copolymer. Key characteristics include:
• Recycled polypropylene (T1):
• Ethylene units: 22.50 wt% to 67.30 wt%
• Butene units: 0.15 wt% to 1.50 wt%
• Propylene units: >30.4 wt%
• Melt Flow Rate: 1.2 to 20.3 g/10 min
• Soluble fraction in xylene: 11.0 wt% to 36.0 wt%

The polypropylene-ethylene copolymer has ethylene units content from 19.0 wt% to 44.0 wt% and a Melt Flow Rate ranging from 2.2 to 20.7 g/10 min.

## Description

### FIELD OF THE INVENTION

The present disclosure relates to polypropylene compositions containing recycled material that can be used for the preparation of molded articles.

### BACKGROUND OF THE INVENTION

Polyolefins, in particular polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film, and BOPP film), rigid packaging, blow molded bottles and injection molded containers. Usually, through a step of separation from other polymers, such as PVC, PET, or PS, two main polyolefin fractions are obtained, namely polyethylenes (in particular HDPE LDPE, LLDPE) and polypropylenes (homopolymers, random copolymers, heterophasic copolymers).

However, the multicomponent nature of the recycled material often results in low mechanical and optical performances of the polyolefin formulations in which part of the virgin polymer is replaced by recycled polymer.

In an effort to mitigate the mechanical properties deterioration the use of compatibilizer ingredients has been proposed in the art. US 5,030,662 for example discloses the use of compatibilizer of the type that reacts with the polymer matrix under heat and shearing conditions either by free radical or ionic mechanism. Examples of compatibilizers according to this document are olefin copolymers with polar monomers such as maleic anhydride or vinyl acetate.

WO2007/071494 discloses the use of a heterophasic polyolefin composition having flexural modulus equal to or lower than 600 MPa as a compatibilizer agent for a recycled polyolefin composition.

It has now unexpectedly been found that certain specific formulations of recycled material although being based on multiplicity of chemically different components when mixed with virgin polymers generate polyolefin compositions combining good mechanical properties profile with an optimum balance of impact properties and tensile modulus.

### SUMMARY OF THE INVENTION

It is therefore an object of the present disclosure:
T1) from 15 wt% to 60 wt%; preferably from 20 wt% to 50 wt%; more preferably from 25 wt% to 40 wt%; of a recycled polypropylene composition;
T2) from 40 wt% to 85 wt%; preferably from 50 wt% to 80 wt%; more preferably from 60 wt% to 75 wt%; of a polypropylene composition comprising:
   A) from 5 wt% to 35 wt%; preferably from 10 wt% to 30 wt%; more preferably from 15 wt% to 25 wt%; of a first propylene homopolymer , having:
      - a fraction soluble in xylene at 25°C lower than 4.0 wt%; preferably lower than 3.0 wt%;
      - a Melt Flow Rate (ISO 1133 230°C/5.0 kg) ranging from 100 to 200 g/10 min; preferably ranging from 110 to 190 g/10 min; more preferably ranging from 135 to 170 g/10 min;
      - Tensile modulus, measured according to ISO 527-2, ranging from 1100N/mm² to 1900 N/mm²; preferably ranging from 1200 N/mm² to 1800 N/mm²; more preferably ranging from 1300 N/mm² to 1700 N/mm²;
   B) from 65 wt% to 95 wt%; preferably from 70 wt% to 90 wt%; more preferably from 75 wt% to 85 wt%; of a polypropylene ethylene copolymer comprising:
      - b1) from 65 wt% to 87 wt%, preferably from 67 wt% to 85 wt%; more preferably from 71 wt% to 81 wt% of a second propylene homopolymer having:
         - a Melt Flow Rate (ISO 1133 230°C/5.0 kg) ranging from 40.0 to 100.0 g/10 min; preferably ranging from 50.0 to 85.5 g/10 min; more preferably ranging from 55.0 to 75.5 g/10 min;
         - (b2) from 13 wt% to 35 wt%; preferably from 15 wt% to 33 wt%; more preferably from 19 wt% to 29 wt% of a copolymer of propylene and ethylene having:
         - units derived from ethylene, measured according to ¹³C-NMR, in an amount ranging from 19.0 wt% to 44.0 wt%; preferably from 24.2 wt% to 42.4 wt%; more preferably ranging from 21.8 wt% to 39.3 wt%; said polypropylene copolymer (B) being further characterized by:
         - a Melt Flow Rate (ISO 1133 230°C/5.0 kg) ranging from 2.2 to 20.7 g/10 min; preferably from 5.3 to 18.4 g/10 min; more preferably ranging from 7.4 to 14.2 g/10 min;
         - an amount of fraction soluble in xylene at 25°C ranging from 13.0 wt% to 33.0 wt%; preferably from 15.0 wt% to 31.0 wt% ; more preferably from 18.0 wt% to 28.0 wt%;
         - intrinsic viscosity fraction soluble in xylene at 25°C, measured in tetrahydronaphthalene at 135 °C, ranging from 5.5 to 9.5 dl/g; preferably from 6.0 to 9.1 dl/g; more preferably ranging from 6.3 to 8.7 dl/g; and,

         in the said composition the sum of b1) and b2), being referred to the total weight of b1) and b2), is 100 wt%,
         the sum of the amounts of (A) and (B) being referred to the total weight of (A) and (B) is 100 wt%;
         the sum of the amounts of (T1) and (T2) being referred to the total weight of (T1) and (T2) is 100 wt%;
   the recycled polypropylene composition (T1) has:
   Ethylene derived units content, measured with ¹³C-NMR, ranging from 22.50 wt% to 67.30 wt%; preferably from 32.50 wt% to 57.30 wt%; more preferably from 38.50 wt% to 50.30 wt%;
   Butene derived units content, measured with ¹³C-NMR, ranging from 0.15 wt% to 1.50 wt%; preferably from 0.20 wt% to 1.30 wt%; more preferably from 0.30 wt% to 1.00 wt%;
   Propylene derived units content, measured with ¹³C-NMR, are higher than 30.4 wt%; preferably higher than 35 wt%; more preferably higher than 38 wt%;
   Melt Flow Rate (ISO 1133 230°C/2.16 kg) ranging from 1.2 to 20.3 g/10 min; preferably ranging from 2.4 to 17.4 g/10 min; more preferably ranging from 3.2 to 12.3 g/10 min;
   an amount of fraction soluble in xylene at 25°C ranging from 11.0 wt% to 36.0 wt%; preferably from 13.0 wt% to 30.0 wt% ; more preferably from 14.0 wt% to 28.0 wt%.

### DETAILED DESCRIPTION OF THE INVENTION

Preferably the recycled polypropylene composition (T1) has:
Tensile modulus, measured according to ISO 527-2, ranging from 500 N/mm² to 1600 N/mm²; preferably ranging from 660 N/mm² to 1480 N/mm²; more preferably ranging from 750 N/mm² to 1260 N/mm².

Preferably the recycled polypropylene composition (T1) has:
Charpy impact test at 23°C, determined according to ISO 179-1eA, and ISO 1873-2, ranging from 2.2 kJ/m² to 9.0 kJ/m²; preferably ranging from 3.1 kJ/m² to 8.2 kJ/m²; more preferably ranging from 3.4 kJ/m² to 7.3 kJ/m².

Preferably the recycled polypropylene composition (T1) has:
Elongation at break, measured according To ISO 527, ranging 10 % to 50 %; preferably ranging from 15% to 40%; more preferably ranging from 17% to 30%.

The term "copolymer" as used herein refers to polymers with two different recurring units.

The term "recycled" is used to designate polymer materials deriving from at least one cycle of processing into manufactured articles, as opposed to virgin polymers that is a polymer not subjected at least one cycle of processing into manufactured articles.

The term "consisting essentially of", as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (T1) and (T2) and any preferred range of features of components (T1) and (T2) can be combined with any preferred range of one or more of the features of components (T1) to (T2) and with any possible additional component, and its features, described in the present disclosure.

Components A) and B) can be prepared by polymerizing propylene, optionally in mixture with ethylene in the presence of a catalyst comprising the product of the reaction between:
i) a solid catalyst component comprising Ti, Mg, Cl, and at least an internal electron donor compound;
ii) an alkylaluminum compound and,
iii) an external electron-donor compound; preferably the external donor compound has the general formula:

   (R⁷)ₐ(R⁸)_{b}Si(OR⁹)_{c},

   where a and b are integers from 0 to 2, c is an integer from 1 to 4 and the sum (a+b+c) is 4; R⁷, R⁸, and R⁹, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates, and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound can be added in the desired ratios during the treatment with TiCl₄.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R7 and R8 is selected from branched alkyl, cycloalkyl or aryl groups with 3-10 carbon atoms optionally containing heteroatoms and R⁹ is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R8 is a branched alkyl or cycloalkyl group, optionally containing heteroatoms, and R9 is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.
Component B) can be prepared in a continuous sequential polymerization process, wherein component b1) is prepared in the first reactor and component b2) is prepared in the second reactor in the presence of component b1) according to the known techniques and operating in gas phase, or in liquid phase in the presence or not of inert diluent, or by mixed liquid-gas techniques.
Component A) being a propylene homopolymer can be prepared in a continuous sequential polymerization process according to the known techniques and operating in gas phase, or in liquid phase in the presence or not of inert diluent, or by mixed liquid-gas techniques.
Component A) is preferably a commercial polymer grade such as Moplen HP500w sold by Lyondellbasell.
Component B) is preferably a commercial polymer grade such as Moplen EP3200 sold by Lyondellbasell.

Component (T1) can be a Post-Industrial Resin (PIR) or a Post-Consumer Resin (PCR).

Post-Industrial Resin (PIR) is the waste generated from the manufacturing process that is reclaimed or used again in the same material.

Post-Consumer Resin (PCR) defined as recyclate derived from an end product that has completed its life cycle as a consumer item and would otherwise be disposed of as waste.

If needed, the final composition comprising (T1)+(T2) can be subject to a chemical treatment with organic peroxides in order to lower the average molecular weight and increase the melt flow index up to the value needed for the specific application.

Preferably the tensile modulus, ISO 527-2, of the whole recycled polyolefin composition ranges from 740 MPa to 1640 MPa more preferably from 840 to 1440 MPa; even more preferably from 950 to 1390 MPa .

The value of Charpy impact at 23°C, measured according to ISO 179-1eA, and ISO 1873-2, of the whole recycled polyolefin composition preferably ranges from 30.0 kJ/m² to 60.0 kJ /m² ; more preferably it ranges from 35.0 kJ /m² to 55.1 kJ / m²; even more preferably it ranges from 40.5 kJ /m² to 50.6 kJ / m².

The value of Charpy impact at 0°C, measured according to ISO 179-1eA, and ISO 1873-2, of the whole recycled polyolefin composition preferably ranges from 3.0 kJ/m² to 15.0 kJ /m² ; more preferably it ranges from 4.5 kJ /m² to 13.1 kJ / m²; even more preferably it ranges from 5.5 kJ /m² to 10.6 kJ / m².

Elongation at break, measured according To ISO 527, of the whole recycled polyolefin composition ranges from 200% to 700%; preferably from 250% to 500%; more preferably from 280% to 420%.

The whole propylene composition of the present disclosure can be obtained by mechanical blending of the components (T1) and (T2) according to conventional techniques.

The final composition comprising the components (T1) and (T2) may be added with conventional additives, fillers, and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 wt% to 2 wt%, more preferably from 0.1 wt% to 1 wt%, with respect to the total weight, for example.

The propylene polymer composition of the present disclosure can be for the production of molded articles such as injection molded article or blow molded article as bottle and containers.

The following examples are given in order to illustrate but not limit the present disclosure.

### EXAMPLES

### CHARACTERIZATIONS

### Xylene-soluble (XS) Fraction at 25 °C

Xylene Solubles at 25°C have been determined according to ISO 16 152.

### Melt Flow Rate (MFR)

Measured according to ISO 1133-1 at 230 °C with a load of 2.16 kg or 5 kg, as specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ η ].

**Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation: $P . I . = 105 / Gc$ in which Gc is the crossover modulus which is defined as the value (expressed in Pa) at which G'=G" wherein G' is the storage modulus and G" is the loss modulus.

### Evaluation of 13C NMR spectrum of Ethylene, Propylene, 1-Butene, 1-Hexene and 1-Octene copolymers

In the ¹³C NMR spectrum only the signals from Ethylene, Propylene, 1-Butene, 1-Hexene and 1-Octene copolymers were considered (assignments of peak relevant for quantification are reported in Table A. Triad distribution (considering only EBE, EHE and EOE due to the low amount of these comonomers) was obtained from the integration of relevant peaks in ¹³C NMR spectrum (possible overlaps of the peaks of the antioxidant AO1010 were taken into account), using the following relations: $PPP = 100 {I}_{11} / Σ$ for ${I}_{3} / {I}_{4} < 1 : PPE = 100 {I}_{3} / Σ$ for ${I}_{3} / {I}_{4} > 1 : PPE = 100 \left({I}_{8}-6{I}_{4}\right) / Σ$ $EPE = 100 {I}_{7} / Σ$ $EBE = 100 {I}_{1} / Σ$ $EHE = 100 {I}_{6} / Σ$ $EOE = 100 \left({I}_{2}-{I}_{6}\right) / Σ$ $XEX = 100 {I}_{13} / Σ$ $XEE = 100 \left({I}_{12}-{I}_{2}\right) / Σ$ $EEE = 100 \left(0.5\left({I}_{10}-{I}_{2}\right)+0.25 \left({I}_{9}+{I}_{8}\right)\right) / Σ$ Where: $\sum = {I}_{11} + \left({I}_{3} or \left({I}_{8}-6{I}_{4}\right)\right) + {I}_{7} + {I}_{1} + {I}_{6} + {I}_{2} - {I}_{6} + {I}_{13} + {I}_{12} - {I}_{2} + 0.5 \left({I}_{10}-{I}_{2}\right) + 0.25 \left({I}_{9}+{I}_{8}\right)$ and Iₙ are the areas of the corresponding carbon following the numbering scheme reported in Table a and X can be propylene, 1-butene , 1-hexene or 1-octene

The molar content of Ethylene, Propylene, 1-Butene and 1-Octene is obtained from triads using the following relations: $P \left(m%\right) = PPP + PPE + EPE$ $B \left(m%\right) = EBE$ $H \left(m%\right) = EHE$ $O \left(m%\right) = EOE$ $E \left(m%\right) = EEE + XEE + XEX$ Molar content was transformed in weight using monomers molecular weight.

### Evaluation of 1H NMR spectrum

The molar content of Polyethylene terephthalate (PET), Polystyrene (PS) and ethylene/propylene/1-butene/1-hexene/1-octene copolymers were obtained from ¹H spectra.

The aromatic hydrogen peaks of PET and PS (assignments according to Table 2) were used, while the amount of ethylene/propylene/1-Butene/1-Hexene/1-Octene copolymers was determined by the integral of all the aliphatic hydrogens, from which the contribution of the 3 aliphatic hydrogens of the polystyrene was subtracted.

Molar amounts of PET, PS and E/P/B/H/O copolymers were evaluated from the following relations: $PET = 100 0.25 {I}_{a} / Σ$ $PS = 100 0.5 {I}_{c} / Σ$ $Total aliphatic E / P / B / H / O copolymers = 100 0.5 \left({I}_{e}-3PS-9{I}_{d}\right) / Σ$ Where $Σ = 0.25 {I}_{a} + 0.5 {I}_{c} + 0.5 \left({I}_{d}-3PS-100 0.5 \left({I}_{e}-3PS-9{I}_{d}\right)\right. / Σ$

Molar content was transformed in weight percentage using monomers molecular weight considering the MW of CH₂ to estimate the weight contribution from ethylene/propylene/1-butene/1-hexene/1-octene copolymers.

The weight content of P, E, B, H and O obtained from ¹³C spectrum was rescaled to obtain the weight percentage in the whole sample by multiplying each value (wt%) from triads with the rescaling factor "RF": $RF = \left[100-PET\left(wt%\right)-PS\left(wt%\right)\right] / 100$ where PET(wt%) and PS(wt%) are the compositions obtained from ¹H spectrum.

**Table A: Assignments of the ¹³C NMR spectrum of Ethylene/Propylene/1-Octene/1-Butene copolymers**

| Number | Chemical Shift (ppm) | Carbon | Sequence |
|---|---|---|---|
| 1 | 39.6 | T_{δδ} | EBE |
| 2 | 38.8 | T_{δδ} | EOE + EHE |
| 3 | 38.2 - 37.6 | S_{αγ} | PE |
| 4 | 36.2 | CH₂ | AO1010 |
| 6 | 34.0 | 4B₄ | EHE |
| 7 | 33.3 - 33.2 | T_{δδ} | EPE |
| 8 | 30.8 - 30.7 | T_{βδ} | PPE |
| 8 | 30.3 | S_{γδ} | XEEE |
| 9 | 30.2 | S_{γδ} | PEEE |
| 10 | 29.9 | S_{δδ +} 4B₆ | EEE + O |
| 11 | 28.8 - 28.2 | T_{ββ} | PPP |
| 12 | 27.4 - 26.7 | S_{βδ} + 5B₆ | XE+O |
| 13 | 24.7 - 24.1 | S_{ββ} | XEX |

**Table B Assignments of the ¹H NMR spectrum of Ethylene/Propylene/1-Butene/1-Hexene/1-Octene copolymers containing PS and PET**

| Number | Chemical Shift (ppm) | Proton | Sequence |
|---|---|---|---|
| a | 8.08 | CH | PET |
| b | 7.20 - 6.81 | CH | PS |
| c | 6.81 - 6.33 | CH | PS |
| d | 2.91 | CH₂ | AO1010 |
| e | 1.80 - 0.70 | CH + CH_{2 +} CH3 | Total aliphatic |
| | 1.25 | CH + CH₂ | PS |

### Ethylene (C2) content

### ¹³C NMR of propylene/ethylene copolymers component b2)

¹³C NMR spectra were acquired on a Bruker AV-600 spectrometer equipped with cryoprobe, operating at 160.91 MHz in the Fourier transform mode at 120°C.

The peak of the S_{ββ} carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

| | | |
|---|---|---|
| PPP = 100 T_{ββ}/S | PPE = 100 T_{βδ}/S | EPE = 100 T_{δδ}/S |
| PEP = 100 S_{ββ}/S | PEE= 100 S_{βδ}/S | EEE = 100 (0.25 S_{γδ}+0.5 S_{δδ})/S |

$S = {T}_{ββ} + {T}_{βδ} + {T}_{δδ} + {S}_{ββ} + {S}_{βδ} + 0.25 {S}_{γδ} + 0.5 {S}_{δδ}$

The molar percentage of ethylene content was evaluated using the following equation:
$E % mol = 100 * \left[PEP+PEE+EEE\right]$ The weight percentage of ethylene content was evaluated using the following equation: $E % wt . = \frac{100 * E % mol * {MW}_{E}}{E % mol * {MW}_{E} + P % mol * {MW}_{P}}$
where P% mol is the molar percentage of propylene content, while MW_{E} and MW_{P} are the molecular weights of ethylene and propylene, respectively.

The product of reactivity ratio *r*₁*r*₂ was calculated according to Carman (C.J. Carman, R.A. Harrington and C.E. Wilkes, Macromolecules, 1977; 10, 536) as: ${r}_{1} {r}_{2} = 1 + \left(\frac{EEE + PEE}{PEP}+1\right) - \left(\frac{P}{E}+1\right) {\left(\frac{EEE + PEE}{PEP}+1\right)}^{0.5}$

The tacticity of Propylene sequences was calculated as mm content from the ratio of the PPP mmT_{ββ} (28.90-29.65 ppm) and the whole T_{ββ} (29.80-28.37 ppm).

### Samples for the mechanical tests

Samples have been obtained according to ISO 1873-2:2007.
**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,
**Melting point and crystallization point**

The melting point has been measured by using a DSC instrument according to ISO 11357-3, at scanning rate of 20C/min both in cooling and heating, on a sample of weight between 5 and 7 mg., under inert N₂ flow. Instrument calibration made with Indium. **Density,** measured according to ISO 1183-1

### EXAMPLES

### Component T1)

Component T1 is recycled polymer grade sold by Revet. The properties of the polymer are reported on table 1.

**Table 1**

| Component T1 | | |
|---|---|---|
| MFR 2.16 Kg/230°C | g/10 min | 5.7 |
| XS | % | 19.1 |
| C2 (NMR) | wt% | 42.8 |
| C3 (NMR) | wt% | >38.0 |
| C4 (NMR) | wt% | 0.4 |

| Mechanical Properties | | |
|---|---|---|
| Tensile Modulus | N/mm² | 980 |
| Charpy Impact @ 23°C | kJ/m² | 4.3 |
| Elongation @ break | % | 22 |

### Component A)

Component A is a propylene homopolymer Moplen HP500W sold by LyondellBasell, it can be synthesized according to the procedure known in the art, Moplen HP500W has the property set forth in table 2.

**Table 2**

| **Variable Name** | **Units** | **HP500W** |
|---|---|---|
| MFR2.16 | g/10 min | 150.0 |
| Tensile Modulus | N/mm² | 1600 |
| XS | Wt% | <3 |

### Component B)

Component B is an heterophasic copolymer comprising components b1) and b2) the properties are set forth in table 3.

**Table 3**

| | | |
|---|---|---|
| | | |

| component b1) | | |
|---|---|---|
| MFR 230°C/2.16 kg | g/10 min | 65.0 |
| split | wt% | 76 |

| component b2) | | |
|---|---|---|
| C2 content | wt% | 33.5 |
| split | wt% | 24 |

| total composition | | |
|---|---|---|
| MFR 230°C/2.16 kg | g/10 min | 9.5 |
| XS | wt% | 23.5 |
| IV on XS | dl/g | 7.1 |

| | | |
|---|---|---|
| XS fraction soluble in xylene at 25°C C2 ethylene derived units IV intrinsic viscosity | | |

### Component B)

### Component B) has been obtained with the following process

The Ziegler-Natta catalyst was prepared according to the Example 5, lines 48-55 of the European Patent EP728769. Triethylalurninium (TEAL) was used as co-catalyst and dicyclopentyldimethoxysilane as external donor.

The propylene polymer compositions of the examples were prepared in a two-step polymerization process, wherein the copolymer (b1) was prepared in the first polymerization step by feeding the monomers and the catalyst system to a gas-phase polymerization reactor comprising two interconnected polymerization zones, a riser and a downcomer (MZC reactor), as described in the European Patent EP-A-1012195.

The polymerization mixture was discharged from said reactor, conveyed to a gas-solid separator and the polymerized material was sent into a conventional gas-phase fluidized-bed reactor where the propylene ethylene copolymer (b2) was produced. The operative conditions are indicated in Table 4.

The polymer particles exiting from the second polymerization step were subjected to a steam treatment to remove the unreacted monomers and dried.

**Table 4**

| **Example** | | | **1** |
|---|---|---|---|
| Component A) (reactor MZCR | | | |
| TEAL/external donor | | wt/wt | 3.9 |
| TEAL/catalyst | | wt/wt | 5.1 |
| Temperature | | °C | 77 |
| Pressure | | bar-g | 28 |
| Split holdup | riser | wt% | 38 |
| | downcomer | wt% | 62 |
| C₃⁻ riser | | mole% | 82 |
| H₂/C₃⁻ riser | | mol/mol | 0.05 |
| H₂/C₃⁻ downcomer | | mol/mol | 0.03 |

| Component B (fluidized bed reactor) | | | |
|---|---|---|---|
| Temperature | | °C | 80 |
| Pressure | | MPa | 19 |
| Split | | % | 24 |
| C₂⁻/C₂⁻+C₃⁻ | | mol/mol | 0.22 |
| H₂/C₂⁻ | | mol/mol | 0.006 |

| | | | |
|---|---|---|---|
| C₂⁻= ethylene C₃⁻ = propylene | | | |

### Component T2

Components A) and B) have been blended in an extruder (Berstorff extruder). The polymer particles are extruded under nitrogen atmosphere in a twin screw extruder, at a rotation speed of 250 rpm and a melt temperature of 200-250° C. The composition is reported in table 5.

**Table 5**

| Component | T2 |
|---|---|
| Component A) wt% | 20 |
| Component C) wt% | 80 |

### Example 1 and comparative example 2

30 wt% of Component T1 have been blended with 70 wt% of component T2, the characterization of the resulting compositions is reported on table 6.

**Table 6**

| | unit | Ex 1 | Comp. Ex 2 |
|---|---|---|---|
| Melt Flow Rate | g/10 min | 16.7 | 11.2 |
| Charpy 23°C | kJ/ m² | 13.9 | 12 |
| Charpy 0°C | kJ/ m² | 6.6 | 5.8 |
| Tensile Modulus | N/mm² | 1150 | 1160 |
| Elongation at break | % | 330 | 250 |

In comparative example 2 component T1 is a commercial recycled polymer grade. The properties of the polymer are reported on table 7.

**Table 7**

| Component T1 | | |
|---|---|---|
| MFR 2.16 Kg/230°C | g/10 min | 4.8 |
| XS | % | 8.0 |
| C2 | wt% | 9.4 |
| C3 (NMR) | wt% | >60.0 |
| C4 (NMR) | wt% | 0.08 |

| Mechanical Properties | | |
|---|---|---|
| Tensile Modulus | N/mm² | 1350 |
| Charpy Impact @ 23°C | kJ/m² | 6.3 |
| Elongation @ break | % | 120 |

From table 6 clearly results that the composition according to example 1 shows a better elongation at break, this result is unexpected by considering the fact that the elongation at break of T1 is 22 %.

## Claims

1. A recycled polyolefin composition comprising:
T1) from 15 wt% to 60 wt%; of a recycled polypropylene composition;
T2) from 40 wt% to 85 wt% of a polypropylene composition comprising:
A) from 5 wt% to 35 wt%; of a first propylene homopolymer , having:
- a fraction soluble in xylene at 25°C lower than 4.0 wt%;
- a Melt Flow Rate (ISO 1133 230°C/5.0 kg) ranging from 100 to 200 g/10 min;
- Tensile modulus, measured according to ISO 527-2, ranging from 1100N/mm² to 1900 N/mm²;
B) from 65 wt% to 95 wt% of a polypropylene ethylene copolymer comprising:
- b1) from 65 wt% to 87 wt% of a second propylene homopolymer having:
- - a Melt Flow Rate (ISO 1133 230°C/5.0 kg) ranging from 40.0 to 100.0 g/10 min;
- (b2) from 13 wt% to 35 wt%; of a copolymer of propylene and ethylene having:
- units derived from ethylene, measured according to ¹³C-NMR, in an amount ranging from 19.0 wt% to 44.0 wt%;
said polypropylene copolymer (B) being further **characterized by**:
- a Melt Flow Rate (ISO 1133 230°C/5.0 kg) ranging from 2.2 to 20.7 g/10 min;
- an amount of fraction soluble in xylene at 25°C ranging from 13.0 wt% to 33.0 wt%;
- intrinsic viscosity fraction soluble in xylene at 25°C, measured in tetrahydronaphthalene at 135 °C, ranging from 5.5 to 9.5 dl/g; and,
in the said composition the sum of b1) and b2), being referred to the total weight of b1) and b2), is 100 wt%,
the sum of the amounts of (A) and (B) being referred to the total weight of (A) and (B) is 100 wt%;
the sum of the amounts of (T1) and (T2) being referred to the total weight of (T1) and (T2) is 100 wt%;
the recycled polypropylene composition (T1) has:
ethylene derived units content, measured with ¹³C-NMR, ranging from 22.50 wt% to 67.30 wt%;
butene derived units content, measured with ¹³C-NMR, ranging from 0.15 wt% to 1.50 wt%;
propylene derived units content, measured with ¹³C-NMR, higher than 30.4 wt%;
Melt Flow Rate (ISO 1133 230°C/2.16 kg) ranging from 1.2 to 20.3 g/10 min;
an amount of fraction soluble in xylene at 25°C ranging from 11.0 wt% to 36.0 wt%.

2. The recycled polyolefin composition according to claim 1 wherein the component (T1) ranges from 20 wt% to 50 wt%; and component (T2) ranges from 50 wt% to 80 wt%.

3. The recycled polyolefin composition according to claims 1 or 2 wherein in component B) the Melt Flow Rate (ISO 1133 230°C/5.0 kg) ranges from 5.3 to 18.4 g/10 min.

4. The recycled polyolefin composition according to any of the preceding claims wherein in component B) component b1) ranges from 67 wt% to 85 wt%; and component b2) ranges from 15 wt% to 33 wt%.

5. The recycled polyolefin composition according to any of the preceding claims wherein in component b1) the Melt Flow Rate (ISO 1133 230°C/5.0 kg) ranges from 50.0 to 85.5 g/10 min

6. The recycled polyolefin composition according to any of the preceding claims wherein in component B) the intrinsic viscosity fraction soluble in xylene at 25°C, measured in tetrahydronaphthalene at 135 °C, ranges from 6.0 to 9.1 dl/g.

7. The recycled polyolefin composition according to any of the preceding claims wherein component (B) has the amount of fraction soluble in xylene at 25°C ranging from 15.0 wt% to 31.0 wt%.

8. The recycled polyolefin composition according to any of the preceding claims wherein in component (B) the Melt Flow Rate (ISO 1133 230°C/5.0 kg) ranges from 5.3 to 18.4 g/10 min.

9. The recycled polyolefin composition according to any of the preceding claims wherein component (T1) has the ethylene derived units content, measured with 13C-NMR, ranges from 32.50 wt% to 57.30 wt%.

10. The recycled polyolefin composition according to a to any of the preceding claims wherein in component (T1) butene derived units content, measured with 13C-NMR, ranges from 0.2 wt% to 1.3 wt%.

11. The recycled polyolefin composition according to any of the preceding claims wherein in component (T1) the propylene derived units content, measured with 13C-NMR, are higher than 35 wt%.

12. The recycled polyolefin composition according to any of the preceding claims wherein in component (T1) the tensile modulus, measured according to ISO 527-2, ranges from 500 N/mm2 to 1600 N/mm2.

13. The recycled polyolefin composition according to any of the preceding claims wherein in component (T1) the Charpy impact test at 23°C, determined according to ISO 179-1eA, and ISO 1873-2, ranges from 2.2 kJ/m2 to 9.0 kJ/m2.

14. The recycled polyolefin composition according to claim 1 wherein the component (T1) ranges from 25 wt% to 40 wt%; and component (T2) ranges from 60 wt% to 75 wt%;

15. A molded article obtained from the recycled polyolefin composition according to any of the preceding claims.
